Europäisches Patentamt

European Patent Office

Office européen des brevets

(19)

(11) Publication number: **0 236 634 B1**

## EUROPEAN PATENT SPECIFICATION

(12)

(45) Date of publication of patent specification: **24.07.91**

(51) Int. Cl.⁵: **F28C 1/14, F28D 5/02, F28F 9/00, F28F 9/26**

(21) Application number: **86310091.3**

(22) Date of filing: **23.12.86**

(54) Cooling method.

(30) Priority: **26.12.85 US 813489**

(43) Date of publication of application:
**16.09.87 Bulletin 87/38**

(45) Publication of the grant of the patent:
**24.07.91 Bulletin 91/30**

(84) Designated Contracting States:
**AT BE CH DE ES FR GB GR IT LI LU NL SE**

(56) References cited:
**BE-A- 894 754        FR-A- 2 295 395
FR-A- 2 405 451      GB-A- 1 559 329
US-A- 3 028 149      US-A- 3 864 442
US-A- 3 870 485      US-A- 4 076 771
US-A- 4 112 027      US-A- 4 280 556**

**Patent Abstracts of Japan, vol.
9,no.194(M-403)(1917), 10.08.1985**

**Patent Abstracts of Japan, vol. 9, no.
229(M-413)(1952), 14.09.1985**

(73) Proprietor: **BALTIMORE AIRCOIL COMPANY, INC.**
**7595 Montevideo**
**Jessup Maryland 20794(US)**

(72) Inventor: **Cates, Robert E.**
**657 Bay Green Drive**
**Arnold Maryland 21012(US)**

(74) Representative: **Davies, Christopher Robert et al**
**Frank B. Dehn & Co. Imperial House 15-19 Kingsway**
**London WC2B 6UZ(GB)**

## Description

The present invention relates generally to a method for evaporative closed circuit fluid cooling or evaporative condensing.

In an induced draft cross flow or doubleflow cooling tower, a fan is mounted in the roof outlet of the tower. This fan draws or induces air flow inwardly into the cooling tower through a sidewall or opposite sidewalls of the tower. Water or other evaporative liquid to be cooled is pumped to the top of the cooling tower structure and distributed through a series of spray nozzles. These spray nozzles emit a diffused spray of the water across the top of an appropriately selected fill media. Such fill media most typically comprises a bundle of generally spaced parallel plastic sheets across each of which the water spray is dispersed and downwardly passed by gravity. The large surface area across which the water is dispersed on such sheets leads to good cooling by the induced airflow directed between such sheets. The cooled water is collected in a sump and passed through to the desired cooling system wherein it will become heated and then pumped back to the cooling tower.

A modification to such induced draft cooling tower is shown in U.S. Patent No. 4,112,027. In that patent, the addition of a series of serpentine heat exchange conduits is provided beneath the bundle of fill sheets. A hot fluid to be cooled enters the heat exchange conduits through an inlet header at the lower or bottom edge of such conduits with the cooled fluid exiting the conduits through a header joining the upper ends of the conduits. Accordingly, the hot fluid to be cooled enters at the lower end of the conduits and travels upwardly therethrough in primarily a counterflow relationship to the external cooling water dropping downwardly by gravity from the fill sheets. The cooling water passing downwardly over the fill sheets and over the external surfaces of the heat exchange conduits is collected in a sump below the conduits and pumped directly back upwardly to the discharge spray assembly. A stated purpose of this cooling tower assembly is to have the coldest fluid which has been cooled during upward travel through the serpentine conduit to come into indirect thermal interchange with the coldest water exiting the fill assembly. It has previously been assumed that the coldest water occurred falling across the lower edges of the fill sheets as at that area the water has not been previously subject to indirect heating by the fluid in the conduit. The stated purpose is to assure that the fluid temperature in the heat exchange conduit approaches that of the cold water exiting the fill as opposed to approaching the temperature of heated water adjacent the lower ends of the conduits. However, the present invention utilizes a condition not previously recognized in that there is a water temperature gradient across the fill sheets with the coolest water occurring at the air inlet side.

U.S. Patent No. 4,112,027 fails to take into account the fact that there is a temperature differential in the water discharged from the fill bundle when measuring the temperature at the air inlet side of the fill bundle as opposed to the internal air outlet side of the fill bundle. Warmer water by 6-10°F (3.3 - 5.6°C) exits the fill bundle on the internal air outlet side of the fill bundle as opposed to the external air inlet side. Accordingly, in U.S. Patent No. 4,112,027 wherein cooled fluid exiting the coil heat exchanger along the top outlet header directly below the fill bundle is, in fact, not exposed to the coldest possible water from the fill bundle as desired. In the coil heat exchanger of the present invention, the warmest liquid to be cooled enters the coil heat exchanger at the internal or air outlet side of the coil heat exchanger through the inlet manifold. The warmest fluid to be cooled at the inlet thereof the heat exchanger is exposed to the warmest water discharged from the fill bundle. As the liquid to be cooled flows through the serpentine coil assemblies of the heat exchanger in a generally downward and outwardly fashion toward the air inlet side of the cooling tower, the increasingly cooled fluid is exposed to cooler water falling from the fill bundle until finally, when the liquid to be cooled reaches the outermost portion of the heat exchanger adjacent the air inlet side of the cooling tower and at the outlet manifold of the heat exchanger, in fact, the coolest liquid flowing through the heat exchanger is in indirect contact with the coolest water falling from the fill bundle and with the coolest outside air entering the air inlet of the cooling tower.

A major concern in any evaporative heat exchanger or coil heat exchanger is to ensure that the working fluid or internal fluid coolant completely passes through all of the conduit sections without accumulating at any one location. Such accumulation could, in the event of coil shutdown in winter weather, lead to the freezing, expansion and rupture of such conduit section. In U.S. Patent No. 4,112,027, this tube drainage is accomplished by the generally vertical placement of each serpentine coil section with each run or length thereof sloped at a downward angle. In Japanese Patent Publication No. 55-69279, an attempt at such downward slanting is made, but a study of the publication indicates that the lengths or runs of the conduit remain level while the bend or U-sections are slanted downwardly. This would be ineffective in assuring the complete exit of fluid from the conduit. Further, rows of fill material between tube coils are shown in this publication. Such an arrangement is undesirable due to its inability to properly distribute the falling water and inlet air, and the excessive cost and number of parts required to assemble such a configuration.

Another problem in U.S. Patent No. 4,112,027 is that the entire coil heat exchanger must be installed as a single unit. This is undesirable due to both the large size and weight of the coil heat exchanger unit. Further, the particular capacity desired for the coil heat exchanger must be established upon the initial construction of the coil heat exchanger and cannot be modified hereafter. As such units frequently are installed on the rooftops of buildings, it is desirable to decrease the size and weight of such units, or at least enable the coil heat exchanger to be assembled on a modular basis at the actual installation location.

It is an object of the present invention to provide an improved cooling method utilizing a crossflow water/air fluid flow relationship.

The present invention provides a method of cooling a fluid comprising the steps of providing a frame assembly, spraying liquid from nozzles at the top of said frame assembly downward to a collection sump and pumping said liquid from the sump upwardly to said nozzles, providing a fill sheet assembly under the liquid spray, providing a coil assembly forming a heat exchanger below said fill sheet assembly providing a cross draft mechanism for producing a cross draft of air across said fill sheet assembly and said coil assembly, and connecting an input of said coil assembly to a source of fluid to be cooled and an output of said coil assembly to an outlet to receive cooled fluid exiting the cooling tower, wherein the liquid spray draining downwardly from the fill sheet assembly is cooled by said cross draft of air, and characterised in that the coil assembly is positioned such that liquid draining from the part of the fill sheet assembly nearest the output end of the cross draft, which liquid is relatively warm, first contacts a portion of the coil assembly containing the warmest fluid, and liquid draining from the part of the fill sheet assembly nearest the input end of the cross draft of air, which liquid is relatively cool, first contacts a portion of the coil assembly containing the coolest fluid, and in that a portion of said cross draft of air on entering the frame assembly contacts a portion of the coil assembly containing the coolest fluid .

In a mechanical draft cooling tower of the induced draft crossflow type having either a single air entry passage or two air entry passages with a single fan plenum chamber similar to that described above, the water sprayed downwardly onto the fill bundle spreads and trickles down the fill sheets and is cooled by the air draft flowing inwardly through the inlet face of the cooling tower.

In the cooling tower, the tubular coil heat exchanger comprising a plurality of coil assemblies or modules, is provided beneath each fill bundle. Each coil module is comprised of a series of parallel serpentine coils extending at a slight angle to horizontal and in a vertical stacked arrangement. The straight lengths (or runs) of such serpentine coils run crossways to the air inlet face of the cooling tower. The entire module is installed at an angle in the cooling tower and each of the serpentine coils is arranged in the module such that each straight length of the coil slopes downwardly in each of its crossward runs in the module and, therefore, also descends stepwise after each bend. The connecting bends are about level when the module is installed at an angle in the cooling tower. The appropriate piping is provided along with an inlet manifold structure to provide hot liquid or fluid to be cooled to each of the coil heat exchanger module sides which are located at the upper sloped end of the coil module and at the side of the coil heat exchanger facing the fan outlet internal area of the cooling tower. Appropriate outlet piping with a collection manifold is provided adjacent each inlet face or side of the cooling tower such that cooled fluid having passed downwardly through the serpentine coils of each heat exchanger module is collected at the downwardly sloped side of each heat exchanger module.

An additional advantage of the modular arrangement of the coil assemblies of the heat exchanger is that these assemblies may be more readily hoisted to a rooftop installation where they can conveniently be stacked and assembled in the final cooling tower arrangement. Further, the desired capacity of the cooling tower can be readily adjusted by using increased or decreased numbers of such modular coil assemblies in the design of the cooling tower. Such modular coil assemblies can be manufactured in the factory environment and kept in stock with the desired number being designed for installation in the required capacity cooling tower arrangement. Of course, if desired, a single module assembly could be manufactured to the required size, and utilized as the entire desired heat exchanger. Another advantage is that due to the down sloping and staggered arrangement of the coil sections of the coil assembly heat exchanger, the air flow into the coil assembly is of high efficiency with good heat exchanging properties. This is opposed to a coil heat exchanger wherein all coil elements of a particular row are in line with each other thereby lessening the efficiency of heat exchange due to the air inflow.

An embodiment of the invention will now be described, by way of example only, with reference to the accompanying drawings, wherein:

Figure l is a side view in partial cross section of a cooling tower for the method in accordance with the present invention;

Figure 2 is a side view of a heat exchanger coil module for a cooling tower of Fig.1.

Figure 3 is a top view of a heat exchanger coil module of Fig.2;

Figure 4 is a front end view of a heat exchanger coil module of Fig.2;

Figure 5 is a side view of one tube of a coil module of Fig.2, and

Figure 6 is a top view of one tube of a coil module of Fig.2.

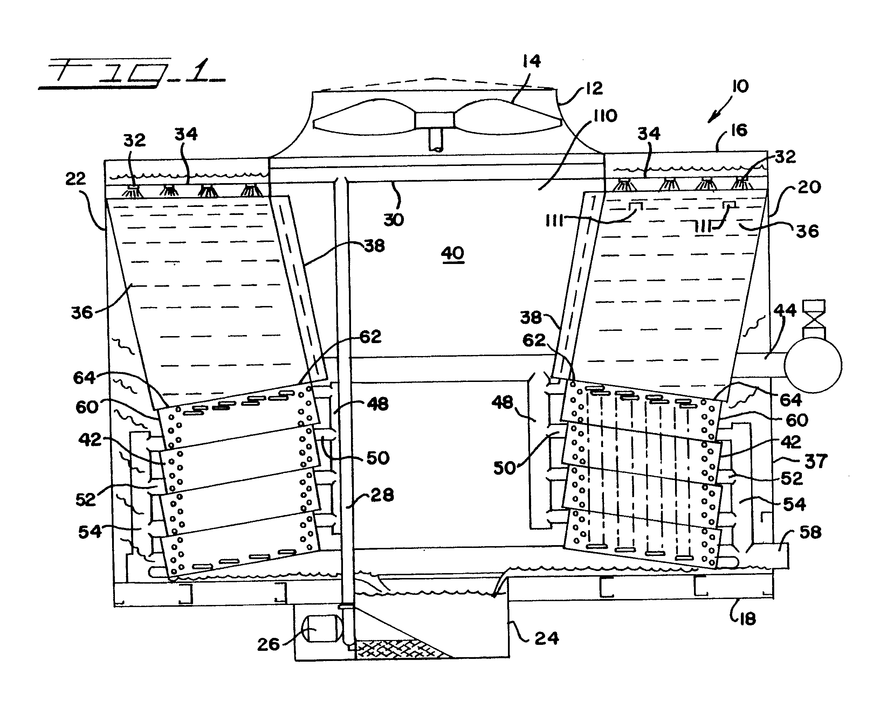

Referring now to Figure 1 of the drawings, a cooling tower is shown generally at 10 and comprises an upper outlet fan enclosure 12 housing a fan 14 therein. Cooling tower 10 is of a generally rectangular shape, comprising an upper surface or roof 16, sidewalls 110 which span the full distance between louvered end openings 20 and 22, and a base structure 18. Fan 14 induces a draft outward from the fan enclosure 12 drawing air inwardly from cooling tower louvered ends 20 and 22. Cooling tower ends 20 and 22 contain similar elements which are numbered identically.

Cooling water or other chosen fluid is collected along the upper surface structure of base 18 and spills into collection sump 24. Pump 26 sends cooling water from sump 24 upward through piping 28 into distribution pipe 30. Distribution pipe 30 empties into water distribution containers 34 on either end of cooling tower 10. It will be understood that identical numbers will be used to identify identical components at each end 20 and 22 of cooling tower 10. Cooling water from distribution container 34 exits through spray nozzles 32 downwardly onto fill bundle 36. Fill bundle 36 comprises a plurality of plastic sheets hung from beams 111 supported at ends by brackets attached to sidewalls 110. Each of the sheets comprising fill bundle 36 is comprised of polyvinyl chloride material having a generally wavy and grooved pattern on both sides thereof to aid in the spreading, rundown and, thusly, the cooling of water exiting from spray nozzles 32. Drift eliminator 38 assures that cooling water in the fill region 36 does not enter air outlet chamber 40 centrally located in cooling tower 10. Generally, drift eliminator 38 comprises a series of closely spaced plastic louvres which, while permitting air flow therethrough, will collect water particles thereon thereby assuring their falling downwardly onto further fill material there below, eventually gravitating to water collection means 24.

A coil heat exchanger assembly 42 is located below each fill bundle 36. Fluid to be cooled enters cooling tower 10 through conduit 44 and flows downwardly through manifolds 48 and through manifold inlets 50 into each coil assembly module 60 of coil heat exchanger 42. Cooled liquid, having passed through coil heat exchangers 42 exits each coil assembly module 60 through outlet 52 into outlet manifold 54 and exits cooling tower 10 through outlet conduit 58. Due to the increased cooling due to the lower temperature of air input adjacent ends 20, 22 of cooling tower 10, water exiting fill 36 at air input end 64 will be cooler by 6-10° F (3.3 - 5.6° C) than water exiting fill 36 at internal ends 62 inward from ends 20, 22. Air input end 37 may include a damper to close off air flow to coil heat exchanger 42 for operation of the cooling tower when it is desired to operate only with the air inlet to the fill section of the cooling tower. Further, air input end 64 may include a perforate panel to further close off coil heat exchanger 42 from the air inlet to the fill section.

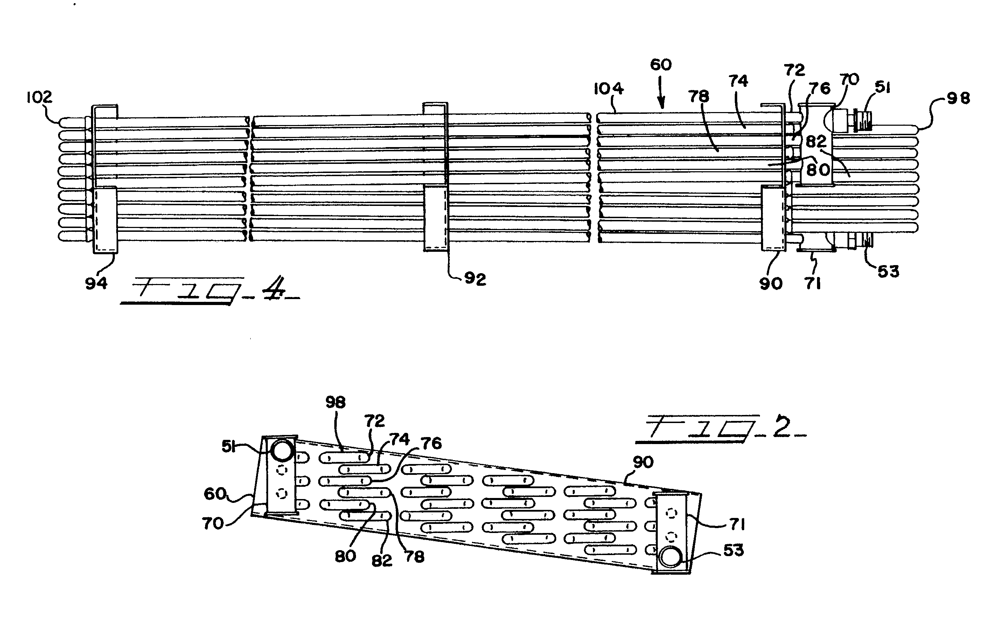

Referring now to Figures 1, 2, 3 and 4, the tubing of an individual coil module 60 will be explained in detail. Coil module 60 comprises six separate serpentine coil paths, numbered 72, 74, 76, 78, 80 and 82. Inlet manifold 48 through connector 50 supplies liquid to be cooled to module inlet manifold 70 through module connector 51. In turn, supplies of fluid to be cooled are inlet to individual serpentine inlet coils 72, 74, 76, 78, 80 and 82. Module manifold 70 is connected in communication with similar inlet manifolds of further modules stacked below module 60. Cooled liquid flows into module outlet manifold 71 through module connector 53 into outlet connection 52 to cooled liquid outlet manifold 54. Structural supports 90, 92 and 94 insure proper spacing of the individual coils and hold the coils in the desired slanted configuration as will be described. Note that in Figure 2, the coil module 60 is shown slanted at the desired angle of installation as shown in Figure 1. In such arrangement, each coil or tube, such as 72, has straight lengths or runs 104, 106 which are inclined at a downward angle to insure complete flow therethrough and generally level U-bends 102, 98 connecting the straight lengths. Each coil is preferably comprised of copper, but other suitable metals or alloys can be utilized. Certain non-metallic compositions, such as plastics, could also be utilized.

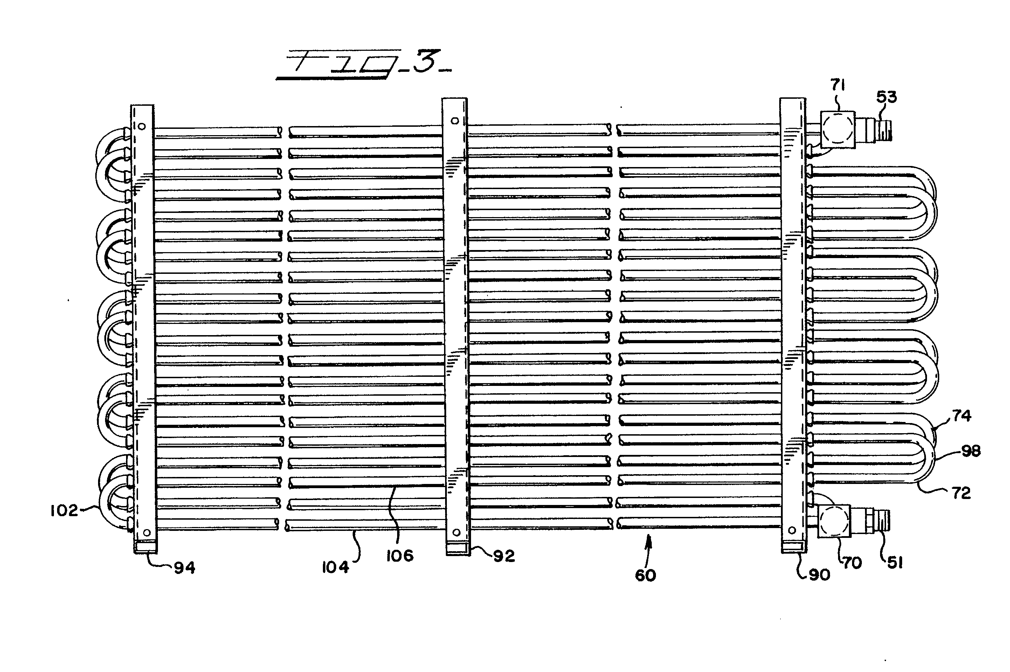

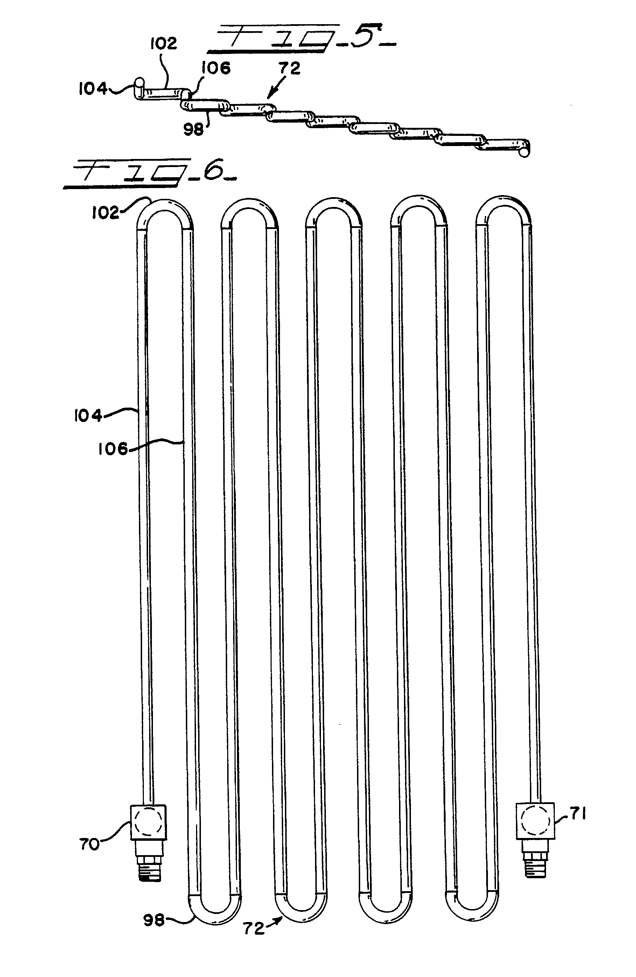

Referring to Figures 5 and 6, a detailed view of one coil circuit or tube such as 72 is shown. Tube 72 is comprised of straight lengths 104, 106, etc., which are connected by U-bends or end sections 98, 102, etc. As installed in the cooling tower, and as shown in the side view of Figure 5 which corresponds with the side view shown in Figure 2, the straight lengths 104, 106 are inclined downwardly from module inlet manifold 70 toward outlet manifold 71. This insures the complete downward and outward flow of the fluid to be cooled through the heat exchanger module tubing when drainage of the heat exchanger is required such as during equipment shutdown periods. The U-bend sections such as 98, 102 are generally level when installed, but experience has shown that due to the much greater length of the straight section of each tube, the fluid flow drainage is complete therethrough.

Referring now to Figure 3, in one preferred method of assembling each module 60, the tube lengths such as l04, l06 are run through properly arranged openings in supports 90, 92 and 94. Preferred U-bends such as 98, l02 are then affixed onto the ends of the lengths to form complete separate tube or coil circuits such as 72, 74, etc. Manifolds 70, 7l are affixed onto the ends of tubes 72, 74, etc. and the complete module is formed, in this example of six parallel flow circuits per module.

All of the tubes 72, 74, etc. are not visible in Figure 3 because that top view of a module 60 is looking at the module as inclined and installed as in Figure l. Note that all tubes are vertically aligned in Figure l. However, for improved air cooling due to the air entering sides 20 and 22 of Figure l, the individual tubes 72, 74, etc. throughout their entire run, are not horizontally aligned and as seen in Figure 4. Accordingly, the air passing inwardly from sides 20, 22 of cooling tower l0 is presented with many different tube surfaces not one behind the other, which aids cooling of the fluid in tubes 72, 74, etc.

## Claims

1. A method of cooling a fluid comprising the steps of providing a frame assembly, spraying liquid from nozzles (32) at the top of said frame assembly downward to a collection sump (24) and pumping said liquid from the sump (24) upwardly to said nozzles (32), providing a fill sheet assembly (36) under the liquid spray, providing a coil assembly (42) forming a heat exchanger below said fill sheet assembly (36), providing a cross draft mechanism for producing a cross draft of air across said fill sheet assembly and said coil assembly, and connecting an input (44) of said coil assembly (42) to a source of fluid to be cooled and an output (58) of said coil assembly (42) to an outlet to receive cooled fluid exiting the cooling tower (10), wherein the liquid spray draining downwardly from the fill sheet assembly (36) is cooled by said cross draft of air, and characterised in that the coil assembly (42) is positioned such that liquid draining from the part of the fill sheet assembly (36) nearest the output end (62) of the cross draft, which liquid is relatively warm, first contacts a portion of the coil assembly containing the warmest fluid, and liquid draining from the part of the fill sheet assembly (36) nearest the input end (64) of the cross draft of air, which liquid is relatively cool, first contacts a portion of the coil assembly (42) containing the coolest fluid, and in that a portion of said cross draft of air on entering the frame assembly contacts a portion of the coil assembly containing the coolest fluid.

2. A method as claimed in claim 2 wherein the fluid to be cooled flows in a serpentine manner from said input end of said fluid conduit to said output end.

## Revendications

1. Procédé de refroidissement d'un fluide, comprenant les étapes suivantes : la réalisation d'un ensemble formant châssis, la pulvérisation d'un liquide par des buses (32) à la partie supérieure de l'ensemble formant le châssis, vers le bas, vers un puisard collecteur (24), et le pompage du liquide du puisard (24) vers le haut, vers les buses (32), la disposition d'un ensemble (36) à feuilles de garnissage au-dessous de la pulvérisation de liquide, la disposition d'un ensemble à serpentin (42) formant un échangeur de chaleur au-dessous de l'ensemble à feuilles de garnissage (36), la disposition d'un mécanisme de tirage transversal destiné à créer un courant transversal d'air sur l'ensemble à feuilles de garnissage et l'ensemble à serpentin, et le raccordement d'une entrée (44) de l'ensemble à serpentin (42) à une source de fluide à refroidir et d'une sortie (58) de l'ensemble à serpentin (42) à une sortie pour la réception du fluide refroidi quittant la tour de refroidissement (10), le liquide pulvérisé qui s'égoutte de l'ensemble (36) à feuilles de garnissage étant refroidi par le courant transversal d'air, le procédé étant caractérisé en ce que l'ensemble à serpentin (42) est disposé afin que le liquide qui s'égoutte de la partie de l'ensemble à feuilles de garnissage (36) qui est la plus proche de l'extrémité de sortie (62) du courant transversal de tirage, ce liquide étant relativement tiède, vienne d'abord au contact d'une partie de l'ensemble à serpentin contenant le fluide le plus chaud, et que le liquide qui s'égoutte de la partie de l'ensemble à feuilles de garnissage (36) la plus proche de l'extrémité d'entrée (64) du courant transversal d'air, ce liquide étant relativement froid, vienne d'abord au contact d'une partie de l'ensemble à serpentin (42) qui contient le fluide le plus froid, et en ce qu'une partie du courant transversal d'air, lorsqu'il pénètre dans l'ensemble formant le châssis, est au contact d'une partie de l'ensemble à serpentin contenant le fluide le plus froid.

2. Procédé selon la revendication 1, dans lequel le fluide à refroidir circule de manière sinueuse de l'extrémité d'entrée du conduit de fluide à l'extrémité de sortie.

**Patentansprüche**

1. Verfahren zum Kühlen eines Fluids, umfassend die Schritte :
   - Vorsehen einer Rahmenanordnung,
   - Versprühen von Flüssigkeit aus Düsen (32) am oberen Ende der Rahmenanordnung nach unten zu einem Sammelbehälter (24) und
   - Pumpen der Flüssigkeit von dem Sammelbehälter (24) nach oben zu den Düsen (32),
   - Vorsehen einer Füllplatten-Anordnung (36) unter dem Flüssigkeits-Sprühnebel,
   - Vorsehen einer Windungsanordnung (42), welche einen Wärmetauscher unter der Füllplatten-Anordnung (36) bildet,
   - Vorsehen eines Querströmungsmechanismus zur Erzeugung einer Quer-Luftströmung über die Füllplatten-Anordnung und die Windungsanordnung und
   - Verbinden eines Einlasses (44) der Windungsanordnung (42) mit einer Quelle zu kühlenden Fluids und eines Auslasses (58) der Windungsanordnung (42) mit einem Auslaß, um gekühltes, aus dem Kühlturm (10) austretendes Fluid aufzunehmen,
   
   wobei der von der Füllplatten-Anordnung (36) nach unten ablaufende Flüssigkeits-Sprühnebel von der Quer-Luftströmung gekühlt wird, **dadurch gekennzeichnet,**
   
   daß die Windungsanordnung (42) derart angeordnet ist, daß Flüssigkeit, welche von dem dem Auslaßende (62) der Querströmung nächstgelegenen Teil der Füllplatten-Anordnung (36) abläuft und relativ warm ist, zuerst einen Abschnitt der Windungsanordnung berührt, der das wärmste Fluid enthält, und Flüssigkeit, welche von dem dem Einlaßende (64) der Querströmung nächstgelegenen Teil der Füllplatten-Anordnung (36) abläuft und relativ kühl ist, zuerst einen Abschnitt der Windungsanordnung (42) berührt, der das kühlste Fluid enthält, und
   
   daß ein Abschnitt der Quer-Luftströmung beim Eintritt in die Rahmenanordnung einen Abschnitt der Windungsanordnung berührt, der das kühlste Fluid enthält.

2. Verfahren nach Anspruch 1, wobei das zu kühlende Fluid schlangenförmig von dem Einlaßende der Fluidenleitung zu dem

Auslaßende fließt.

FIG. 1

FIG. 4.

FIG. 2.

_FIG_3_

FIG_5_

102
104
106
72
98

FIG_6_

102
104
106
70
71
98
72